# EUROPÄISCHE PATENTSCHRIFT

(11) **EP 3 559 080 B1**
(45) Veröffentlichungstag und Bekanntmachung des Hinweises auf die Patenterteilung: **06.01.2021**
(21) Anmeldenummer: 17801476.7
(22) Anmeldetag: 24.11.2017
(51) Int. Cl.: C08G 63/12, C08G 63/668, C08G 63/688, C08L 67/02

(54) **FURANDICARBONSÄUREHALTIGE POLYESTER**
FURANE DICARBOXYLIC ACID POLYESTER
POLYESTERS CONTENANT DE L'ACIDE FURANE DICARBOXYLIQUE

(30) Priorität: 22.12.2016 EP 16206302
(43) Veröffentlichungstag der Anmeldung: 30.10.2019
(73) Patentinhaber: BASF SE, 67056 Ludwigshafen am Rhein (DE)
(72) Erfinder: YAMAMOTO, Motonori, 67056 Ludwigshafen (DE); SCHICK, Michael Bernhard, 67056 Ludwigshafen (DE)
(74) Vertreter: BASF IP Association
(86) Internationale Anmeldenummer: PCT/EP2017/080314
(87) Internationale Veröffentlichungsnummer: WO 2018/114215

(56) Entgegenhaltungen:
- US-A1- 2009 123 767
- US-A1- 2016 200 862

## Beschreibung

Die Erfindung betrifft Polyester nach Anspruch 1.

Weiterhin betriffet die Erfindung die Herstellung der Polyester und deren Verwendung, sowie wäßrige Dispersionen und Polyestermischungen enthaltend diese Polyester.

Furandicarbonsäurehaltige aromatische Polyester sind beispielsweise aus der WO 2010/077133 bekannt und Furandicarbonsäurehaltige aliphatisch-aromatische Polyester aus der WO 2009/135921. Diese Polyester sind jedoch in Wasser nicht dispergierbar.

Aus der CN 102757552 sind wasserlösliche, Furandicarbonsäurehaltige aromatische Polyester bekannt, die einen hohen Gehalt einer sulfonatgruppenhaltigen Verbindung von in den Beispielen über 12 mol-% aufweisen.

US 2009/123767 beschreibt sulfonierte aliphatisch-aromatische Polyester, deren aromatische Dicarbonsäure nicht aus erneuerbaren Rohstoffen stammt.

Mittels wäßriger Dispersionen werden interessante Anwendungen wie die Papierbeschichtung oder die Imprägnierung von Vliesen oder non-woven Artikeln zugänglich.
Ziel der vorliegenden Erfindung war es demnach derartige wäßrige Polyesterdispersionen bereitzustellen.

Interessanterweise lösen die eingangs beschriebenen Polyester enthaltend vorzugsweise 5 bis 10 mol%, jeweils bezogen auf die Komponenten a1) bis a3), einer sulfonatgruppenhaltigen Verbindung die gestellte Aufgabe.

Die erfindungsgemäßen Polyester enthaltend 1 bis 5 mol% und vorzugsweise 1 bis 4,5 mol% und insbesondere bevorzugt 1 bis 2 mol%, jeweils bezogen auf die Komponenten a1) bis a3), einer sulfonatgruppenhaltigen Verbindung sind in der Regel wasserunlöslich. Im Vergleich zu den WO 2010/077133 und WO 2009/135921 bekannten Polyester weisen diese erfindungsgemäßen Polyester eine höhere biologische Abbaubarkeit und verbesserte mechanische Eigenschaften wie eine erhöhte Zugfestigkeit auf.

Im Folgenden wird die Erfindung näher beschrieben.

Die erfindungsgemäßen Polyester umfassen aromatische Polyester enthaltend 100 mol-%, bezogen auf die Komponenten a1) und a2), einer 2,5-Furandicarbonsäure und damit keine Komponente a2) sowie aliphatisch-aromatische Polyester enthaltend 25 bis 99 mol-%, vorzugsweise 60 bis 75 ml-% und insbesondere bevorzugt 65 bis 75 mol-%, jeweils bezogen auf die Komponenten a1) und a2), einer 2,5-Furandicarbonsäure und entsprechend 1 bis 75 mol-%, vorzugsweise 25 bis 40 mol-% und insbesondere bevorzugt 25 bis 35 mol-% einer aliphatischen C₄-C₃₆-Dicarbonsäure, jeweils bezogen auf die Komponenten a1) und a2).

2,5-Furandicarbonsäure (Komponente a1) ist beispielsweise aus WO 2009/135921 und WO 2013/062408, WO 2010/077133 und WO 2007/052847 bekannt.

Die 2,5-Furandicarbonsäure wird vorzugsweise in die Polyestersynthese nicht als freie Säure, sondern als Di-C₁-C₈-Alkyester eingesetzt sind, wobei der 2,5-Furandicarbonsäurediethylester und insbesondere der 2,5-Furandicarbonsäure-dimethylester besonders bevorzugt sind.

In den aliphatisch-aromatischen Polyestern kommen als aliphatische C₄-C₃₆-Dicarbonsäuren (Komponente a2) insbesondere *α*,*ω*-C₄-C₃₆-Dicarbonsäuren in Frage und hier beispielsweise Bernsteinsäure, Glutarsäure, Adipinsäure, Korksäure, Azelainsäure, Sebazinsäure, eine 1,12-C₁₂-Dicarbonsäure, Brassylsäure, 1,16-C₁₆-Dicarbonsäure, 1,18-C₁₈-Dicarbonsäure oder 1,36-C₃₆-Dicarbonsäure oder Gemische dieser Dicarbonsäuren in Frage. Bevorzugt sind Bernsteinsäure, Glutarsäure, Adipinsäure, Azelainsäure, Sebazinsäure oder eine 1,12-C₁₂-Dicarbonsäure oder Mischungen davon und insbesondere bevorzugt die Bernsteinsäure, Adipinsäure, oder Sebazinsäure oder Mischungen davon.

Auch die aliphatischen C₄-C₃₆-Dicarbonsäuren werden vorzugsweise in die Polyestersynthese nicht als freie Säure, sondern als Di-C₁-C₈-Alkyester eingesetzt sind, wobei der jeweilge Diethylester und insbesondere der Dimethylester besonders bevorzugt sind.

Als sulfonatgruppenhaltige Verbindung (Komponente a3) kommen insbesondere aromatische Sufonsäuren bzw. deren Salze und insbedondere bevorzugt deren Alkalisalze in Frage. Geeignet sind beispielsweise die 1,4-Benzoldicarbonsäure-2 sulfonsäure, 1,3-Benzoldicarbonsäure-5 sulfonsäure - im Folgenden auch Isophthalsäure-5 sulfonsäure genannt -, 1,2-Benzoldicarbonsäure-3 sulfonsäure, 1,2-Benzoldicarbonsäure-4 sulfonsäure bzw. deren Salze und insbedondere bevorzugt deren Alkalisalze. Besonders bevorzugt ist Isophthalsäure-5 sulfonsäure Natriumsalz (auch verkürzt NaSiP genannt).

Sowohl von den zuvor beschriebenen aromatischen Polyestern wie den aliphatisch-aromatischen Polyestern sind diejenigen bevorzugt, die 5 bis 10 mol-%, vorzugsweise 6 bis 9 mol-%, bezogen auf die Komponenten a1) bis a3), einer sulfonat-gruppenhaltigen Verbindung und besonders bevorzugt Isophthalsäure-5 sulfonsäure Natriumsalz enthalten, da diese ideal geeignet sind um wäßrige Dispersionen zu bilden.

Weiterhin sind sowohl von den zuvor beschriebenen aromatischen Polyestern wie den aliphatisch-aromatischen Polyestern diejenigen bevorzugt, die 1 bis 5 mol-%, vorzugsweise 1 bis 4,5 mol-%, bezogen auf die Komponenten a1) bis a3), einer sulfonat-gruppenhaltigen Verbindung und besonders bevorzugt Isophthalsäure-5 sulfonsäure Natriumsalz enthalten, da diese wasserunlöslich sind und sich zu Folien, Fasern oder Formteilen mit hohen biologischen Abbauraten und guten mechanischen Eigenschaften wie hoher Zugfestigkeit verarbeiten lassen.

Als Diole (Komponente b1) kommen aliphatische C₂-C₁₂-Diole wie Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 1,6-Hexandiol, 1,8-Oktandiol und 2,2,4-Trimethyl-1,6-hexandiol in Frage, wobei Ethylenglykol, 1,3-Propandiol, 1,4-Butandiol und 2,2-Dimethyl- 1,3-propandiol (Neopentylglykol) bevorzugt sind. Letztere haben zudem den Vorteil, dass sie als nachwachsender Rohstoff zugänglich sind. Es können auch Mischungen unterschiedlicher Alkandiole verwendet werden.

Bei den erfindungsgemäßen aromatischen Polyestern sind diejenigen bevorzugt, die Ethylenglykol, oder Cyclohexandimethanol als Diolkomponente oder anstelle von b1) Diethylenglylol oder Triethylenglykol als Komponente c1) enthalten und bei den erfindungsgemäßen aliphatisch-aromatischen Polyestern sind insbesondere diejenigen bevorzugt, die 1,4-Butandiol als Diolkomponente enthalten.

Als Diole (Komponente b1) kommen auch cycloaliphatische C₆-C₁₂-Diole wie Cyclopentandiol, 1,4-Cyclohexandiol, 1,4-Cyclohexandimethanol (cis/trans), 1,4-Di(hydroxymethyl)cyclohexan oder 2,5-Tetrahydrofurandimethanol in Frage, wobei 1,4-Cyclohexandimethanol bevorzugt ist.

In der Regel enthalten die erfindungsgemäßen Polyester 0 bis 2 mol-%, vorzugsweise 0,01 bis 1,0 mol-% und insbesondere bevorzugt 0,05 bis 0,3 mol-%, bezogen auf die Komponenten a1) bis a3), eines mindestens 3 funktionelle Gruppen enthaltenden Verzweigers (Komponente b2). Der Verzweiger ist bevorzugt ein mindestens trifunktioneller Alkohol oder eine mindestens trifunktionelle Carbonsäure.

Besonders bevorzugte Verzweiger haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponente lassen sich biologisch abbaubare Polyester mit einer strukturellen Viskosität aufbauen. Die biologisch abbaubaren Polyester lassen sich leichter verarbeiten.

Die erfindungsgemäßen Polyester enthalten in der Regel keine Komponente C. In speziellen Ausführungsformen kann sie beispielsweise in einem Mengenverhältnis von 0,1 bis 30 mol-% zu dem erfindungsgemäßen Polyester zugesetzt werden. In allen Ausführungsformen ergeben die Komponenten b1) und b2) und gegebenenfalls c1), c3) und c4) 100 mol-%. Die Komponenten c2 und c6 können unabhängig von den Komponenten A und B in den obengenannten Mengenverhältnissen enthalten sein. Die Molprozente der Komponenete c5 ergibt mit denjenigen der Komponenten a1) bis a3) zusammen 100.

Die optionale Komponente C besteht aus:
c1) einer Etherfunktionen enthaltenden Dihydroxyverbindung der Formel I

   HO-[(CH₂)ₙ-O]ₘ-H (I)

   in der n für 2, 3 oder 4 und m für eine ganze Zahl von 2 bis 250 stehen,
   Als Dihydroxyverbindungen c1 eignen sich Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.
   Nach einer der bevorzugten Ausführungsformen können beispielsweise von 0 bis 100, bevorzugt 70 bis 99,5 mol-% der Diole B und 0 bis 100, bevorzugt 0,5 bis 30 mol-% der Dihydroxyverbindungen c1, bezogen auf die molare Menge von b1, b2 und c1, für die Herstellung der Polyester verwendet werden.
c2) einer Hydroxycarbonsäure der Formel IIa oder IIb 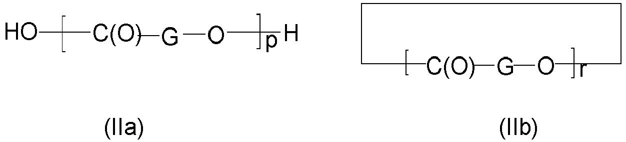 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   Zur Herstellung von Copolyestern kann Hydroxycarbonsäure c2) eingesetzt werden: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polymilchsäure (wie beispielsweise die unter dem Markennamen Ingeo® vertriebenen Produkte der Fa. NatureWorks) sowie eine Mischung aus 3-Polyhydroxybuttersäure und 4-Polyhydroxybutyraten oder 3-Polyhydroxy-valeriansäure oder 3-Polyhydroxy-hexansäure besonders bevorzugt für die Herstellung von Polyestern sind die niedermolekularen und cyclischen Derivate davon.
   Die Hydroxycarbonsäuren können beispielsweise in Mengen von 0,01 bis 50, bevorzugt von 0,1 bis 30 Gew.-% bezogen auf die Menge an A und B verwendet werden.
c3) einem Amino-C₂- bis C₁₂-alkanol oder mindestens einem Amino-C₅-bis C₁₀-cycloalkanol oder Mischungen davon
   Als Amino-C₂-C₁₂-alkanol oder Amino-C₅-C₁₀-cyloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopen-tanol, 6-Aminohexanol sowie Amino-C₅-C₆-cyloalkanole wie Aminocyclopentanol und Aminocyclohexanol oder Mischungen davon ein.
c4) einem Diamino-C₁- bis C₈-Alkan
   Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").
   Nach einer bevorzugten Ausführungsform kann von 0 bis 50 mol-%, bevorzugt 0,1 bis 30 mol-%, c3, bezogen auf die Komponenten A und B, und von 0 bis 30, bevorzugt von 0,1 bis 30 mol-%, c4, bezogen auf die Molmenge von B, für die Herstellung der Polyester eingesetzt werden.
c5) einem 2,2'-Bisoxazolins der allgemeinen Formel III 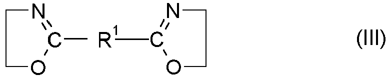 wobei R¹ eine Einfachbindung, eine (CH₂)_{z}-Alkylengruppe, mit z = 2, 3 oder 4, oder eine Phenylengruppe bedeutet,
   Die 2,2'-Bisoxazoline c5 sind im allgemeinen erhältlich durch das Verfahren aus Angew. Chem. Int. Edit., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.
   Nach einer bevorzugten Ausführungsform ist es möglich von 0,1 bis 5, bevorzugt 0,2 bis 4 Gew.-% c5, bezogen auf das Gesamtgewicht von A und B, einzusetzen.
c6) einer Aminocarbonsäure ausgewählt aus der Gruppe, bestehend aus Caprolactam, 1,6 Aminocapronsäure, Laurinlactam, 1,12-Aminolaurinsäure und 1,11-Aminoundecansäure
   oder Mischungen aus c1) bis c6).

Als Komponente c6 können Aminocarbonsäuren ausgewählt aus der Gruppe, bestehend aus Caprolactam, 1,6 Aminocapronsäure, Laurinlactam, 1,12-Aminolaurinsäure und 1,11-Aminoundecansäure verwendet werden.

Im Allgemeinen wird c6 in Mengen von 0 bis 20, bevorzugt von 0,1 bis 10 Gew.-%, bezogen auf die Gesamtmenge der Komponenten A und B, eingesetzt.

Als Komponente d1 werden in der Regel ein Isocyanat oder Isocyanurat oder eine Mischung unterschiedlicher Isocyanate und Isocyanurate eingesetzt. Als Isocyanate können aromatische oder aliphatische Diisocyanate eingesetzt werden. Es können aber auch höher funktionelle Isocyanate verwendet werden.

Unter einem aromatischen Diisocyanat d1 werden im Rahmen der vorliegenden Erfindung vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d1 besonders bevorzugt. Im Allgemeinen werden letztere Diisocyanate als Mischung eingesetzt.

Als dreikerniges Isocyanat d1 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d1, kann die Komponente d1 auch Urethiongruppen, beispielsweise zum Verkappen der Isocyanatgruppen, enthalten.

Unter einem aliphatischen Diisocyanat d1 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d1 sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des 1,6-Hexamethylendiisocyanats.

Im allgemeinen wird die Komponente d1 in Mengen von 0,1 bis 4, besonders bevorzugt 0,2 bis 1,2 Gew.-%, bezogen auf die Komponenten A und B und gegebenenfalls C, eingesetzt. Erfindungsgemäße aromatische Polyester enthalten 100 mol-%, bezogen auf die Komponenten a1) und a2), einer 2,5-Furandicarbonsäure und damit keine Komponente a2). Beispielsweise umfassen aromatische Polyester: Poly(alkylen-2,5-furandicarboxylate) wie Poly(ethylen-2,5-furandicarboxylat), Poly(propylen-2,5-furandicarboxylat), Poly(butylen-2,5-furandicarboxylat), Poly(hexylen-2,5-furandicarboxylat), Poly(octylen-2,5-furandicarboxylat), oder Poly(alkoxylen-2,5-furandicarboxylate) wie Poly(ethoxyethylen-2,5-furandicarboxylate) oder Poly(diethoxyethylen-2,5-furandicarboxylate).

Erfindungsgemäße aliphatisch-aromatische Polyester enthaltend 25 bis 99 mol-%, vorzugsweise 60 bis 75 ml-% und insbesondere bevorzugt 65 bis 75 mol-% einer 2,5-Furandicarbonsäure und entsprechend 1 bis 75 mol-%, vorzugsweise 25 bis 40 mol-% und insbesondere bevorzugt 25 bis 35 mol-% einer aliphatischen C₄-C₃₆-Dicarbonsäure. Aliphatisch-aromatische Polyester umfassen insbesondere: Poly-butylen-2,5-furandicarboxylat-coadipat, Poly-butylen-2,5-furandicarboxylat-coazelat, Poly-butylen-2,5-furandicarboxylat-cosebacat, Poly-butylen-2,5-furandicarboxylat-cobrassylat, Poly-butylen-2,5-furandicarboxylat-co-1,12-C₁₂-dicarboxylat, Poly-butylen-2,5-furandicarboxylat-co-1,18-C₁₈-dicarboxylat und Poly-butylen-2,5-furandicarboxylat-co-1,36-C₃₆-dicarboxylat.

Die erfindungsgemäßen Polyester weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl gemäß EN-ISO 1628-1:2012-10 (gemessen in 0,05 g/ml Lösung Phenol/o-Dichlorbenzol (1:1)) liegt zwischen 50 und 450, vorzugsweise von 80 bis 250 mL/g (gemessen in o-Dichlorbenzol/Phenol (Gewichtsverhältnis 50/50). Der Schmelzpunkt liegt im Bereich von 85 bis 150, bevorzugt im Bereich von 95 bis 140° C.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die erfindungsgemäßen Polyester eigenen sich insbesondere zur Herstellung von Folien, Fasern oder Formteilen. Die so hergestellten Materialien weisen eine hohe biologische Abbaubarkeit nach DIN EN 13432 und interessante mechanische Eigenschaften wie insbesondere eine hohe Zugfestigkeit auf.

Zur Herstellung der wäßrigen Dispersionen wird der erfindungsgemäße Polyester mittels eines geeigneten Mischaggregats wie beispielsweise einem Rotor-Stator-Mischer, einem Extruder, einem Rührkessel oder einem statischen Mischer ins wäßrige Dispergiermedium gemischt.

In einer bevorzugten Ausführungsform wird man den erfindungsgemäßen Polyester und das wässrige Dispergiermedium, welches bevorzugt wenigstens eine oberflächenaktive Substanz enthält, gleichzeitig, vorzugsweise kontinuierlich und insbesondere mit einer konstanten Volumenrate dem Mischer zuführen und in gleichem Maße die wäßrige Dispersion entnehmen.

Es ist jedoch auch möglich, in einem vorgelagerten Schritt den erfindungsgemäßen Polyester mit dem wässrigen Dispergiermedium, welches die wenigstens eine oberflächenaktive Substanz enthält, unter Erhalt einer Primäremulsion bei einer Temperatur oberhalb der Schmelz- bzw. Erweichungstemperatur des Polymeren zu vermischen und diese Mischung dem Mischer zuzuführen. Dieser vorgelagerte Schritt wird vorzugsweise in einem Kneter oder Extruder durchgeführt. Die dabei erhaltene Präemulsion wird anschließend dem Mischer(n) zugeführt.

Das wässrige Dispergiermedium enthält neben Wasser in der Regel wenigstens eine oberflächenaktive Substanz. Hierzu zählen polymere oberflächenaktive Substanzen mit Molekulargewichten oberhalb 2000 Dalton (Zahlenmittel), die in der Regel als Schutzkolloide bezeichnet werden, und niedermolekulare oberflächenaktive Substanzen mit Molekulargewichten bis 2000 Dalton, häufig bis 1500 Dalton (Zahlenmittel), die in der Regel als Emulgatoren bezeichnet werden. Die oberflächenaktiven Substanzen können kationisch, anionisch oder neutral sein. In einer bevorzugten Ausgestaltung der Erfindung enthält das wässrige Dispergiermedium wenigstens ein Schutzkolloid, beispielsweise ein neutrales, anionisches oder kationisches Schutzkolloid, gegebenenfalls in Kombination mit einem oder mehreren Emulgatoren.

Beispiele für Schutzkolloide sind wasserlösliche Polymere wie beispielsweise neutrale Schutzkolloide: beispielsweise Polysaccharide, z. B. wasserlösliche Stärken, Stärkederivate und Cellulosederivate wie Methylcellulose, Hydroxypropylcellulose, Hydroxyethylcellulose, Hydroxypropylmethylcellulose, weiterhin Polyvinylalkohole, einschließlich teilverseiftem Polyvinylacetat mit einem Verseifungsgrad von vorzugsweise wenigstens 40 %, insbesondere wenigstens 60 %, Polyacrylamid, Polyvinylpyrrolidon, Polyethylenglykole, Pfropfpolymerisate von Vinylacetat und/oder Vinylpropionat auf Polyethylenglykole, ein- oder beidseitig mit Alkyl-, Carboxyl- oder Aminogruppen endgruppenverschlossene Polyethylenglykole; - anionische wasserlösliche Polymere, deren Polymerrückgrad eine Vielzahl Carboxylgruppen, Sulfonsäuregruppen bzw. Sulfonatgruppen und/oder Phosphonsäuregruppen bzw. Phosphonat-gruppen aufweist, beispielsweise Carboxymethylcellulose, Homo- und Copolymere ethylenisch ungesättigter Monomere, die wenigstens 20 Gew.-%, bezogen auf die Gesamtmenge der Monomere, wenigstens eines ethylenisch ungesättigten Monomers, das wenigstens eine Carboxylgruppe, Sulfonsäuregruppe und/order Phosphonsäuregruppe einpolymerisiert enthält, enthalten und deren Salze, insbesondere die Alkalimetall- und Ammoniumsalze. In den vorgenannten anionischen wasserlöslichen Polymeren, liegen im Wässrigen üblicherweise die an das Polymerrückgrat gebundenen Sulfonsäuregruppen in der Salzform, d. h. als Sulfonat-gruppen, und die Phosphonsäuregruppen dementsprechend als Phosphonatgruppen vor. Bei den Gegenionen handelt es sich dann typischerweise um Alkalimetall- und Erdalkalimetallionen wie Natriumionen, Calciumionen und Ammoniumionen (NH4+);
- kationische Polymere wie Polydiallyldimethylammoniumsalze, z.B. die Chloride;
- anionisch oder kationisch modifizierten Stärken; Beispiele für anionisch modifizierte Stärken sind carboxymethylierte Stärken und n-Octenylsuccinylmodifizierte Stärke, wie sie beispiels-weise als Produkte von der Firma Cargill erhältlich sind (CEmCap / CEmTex / CDeli-Tex n-octenylsuccinylated starches).

Übliche anionische Emulgatoren sind die Salze amphiphiler Substanzen, die eine anionische funktionelle Gruppe aufweisen, z. B. eine Sulfonat-, Phosphonat-, Sulfat- oder Phosphatgruppe. Hierzu zählen beispielsweise die Salze, insbesondere die Alkalimetall- und Ammoniumsalze von Alkylsulfaten (Alkylrest: C₈ bis C₁₂), die Salze, insbesondere die Alkalimetall- und Ammoniumsalze von amphiphilen Verbindungen, die eine sulfatierte oder phosphatierte Oligo-C₂-C₃-alkylenoxid-Gruppe, insbesondere eine sulfatierte oder phosphatierte Oligoethylenoxid-Gruppe aufweisen, wie beispielsweise die Salze, insbesondere die Alkalimetall- und Ammoniumsalze von Schwefelsäurehalbestern, ethoxylierter Alkanole (Ethoxilierungsgrad von 2 bis 50, insbesondere 4 bis 30, Alkylrest: C₁₀ bis C₃₀, insbesondere C₁₂ bis C₁₈) die Salze, insbesondere die Alkalimetall- und Ammoniumsalze von Schwefelsäurehalbestern ethoxylierter Alkylphenole (Ethoxilierungsgrad von 2 bis 50, Alkylrest: C₄ bis C₁₂), die Salze, insbesondere dieAlkalimetall- und Ammoniumsalze von Phosphorsäurehalbestern ethoxylierter Alkanole (Ethoxilierungsgrad von 2 bis 50, insbesondere 4 bis 30, Alkylrest: C₁₀ bis C₃₀, insbesondere C₁₂ bis C₁₈) die Salze, insbesondere die Alkalimetall- und Ammoniumsalze von Phosphorsäure-halbestern ethoxylierter Alkylphenole (Ethoxilierungsgrad von 2 bis 50, Alkylrest: C₄ bis C₁₂), die Salze, insbesondere die Alkalimetall- und Ammoniumsalze von Alkylsulfonsäuren (Alkylrest: C₁₂ bis C₁₈), die Salze, insbesondere die Alkalimetall undAmmoniumsalze von Alkylarylsulfonsäuren (Alkylrest: C₉ bis C₁₈) sowie die Salze, insbesondere die Alkalimetall- und Ammoniumsalze von Alkylbiphenylethersulfonsäuren (Alkylrest: C₆ bis C₁₈) wie z. B. das unter der Bezeichnung Dowfax® 2A1 vertriebene Produkt.

Geeignete kationische Emulgatoren sind in der Regel einen C₆-C₁₈-Alkyl-, C₁-C₁₀-Alkylaryl- oder heterocyclischen Rest aufweisende kationische Salze, zum Beispiel primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze, insbesondere deren Sulfate, Methosulfate, Acetate, Chloride, Bromide, Phosphate, Hexafluorophosphate und dergleichen.

In der Regel enthält das wässrige Dispergiermedium die oberflächenaktive Substanz in einer Konzentration von 0,5 bis 20 Gew.-%, häufig in einer Konzentration von 1 bis 10 Gew.-%, insbesondere in einer Konzentration von 1 bis 5 Gew.-%, bezogen auf das wässrige Dispergiermedium.

Das wässrige Dispergiermittel kann neben Wasser und der oberflächenaktiven Substanz geringe Mengen weiterer Bestandteile enthalten, beispielsweise Entschäumer. Der Anteil an von Wasser und oberflächenaktiver Substanz verschiedener Bestandteile wird in der Regel 5 Gew.-%, insbesondere 1 Gew.-% des wässrigen Dispergiermittels nicht überschreiten. Das wässrige Dispergiermittel enthält vorzugsweise keine oder keine nennenswerten Mengen an flüchtigen organischen Lösungsmitteln. Insbesondere beträgt der Gehalt an flüchtigen organischen Lösungsmitteln weniger als 1 Gew.-%, insbesondere weniger als 5000 ppm und speziell weniger als 1000 ppm. Unter flüchtigen organischen Lösungsmitteln versteht man solche organischen Lösungsmittel, die bei Normaldruck einen Siedepunkt unterhalb 250 °C aufweisen.

Die zuvor genannten wäßrigen Dispersionen eignen sich insbesondere zur Papierbeschichtung oder zum Impregnieren eines Vlieses oder non-woven Artikels.

Weiterhin ist die vorliegende Erfindung auf Polyestermischung gerichtet enthaltend:
i) 5 bis 95 Gew.-%, vorzugsweise 20 bis 80 Gew.-% jeweils bezogen auf die Polyestermischung, des zuvor beschriebenen erfindungsgemäßen Polyesters,
ii) 95 bis 5 Gew.-%, vorzugsweise 80 bis 20 Gew.-% jeweils bezogen auf die Polyestermischung, mindestens einer oder mehrerer Komponenten ausgewählt aus der Gruppe bestehend aus: einem Polyester hergestellt aus einer aliphatischen Dicarbonsäure und einem aliphatischen Diol; Polycaprolacton, Stärke, Zellulose, Polyhydroxyalkanoat, Polyglykolsäure und Polymilchsäure.

PLA mit dem folgenden Eigenschaftsprofil wird bevorzugt eingesetzt:
- einer Schmelzvolumenrate (MVR) nach EN ISO 1133 (190° C, 2,16 kg Gewicht) von 0.5 bis 30 insbesondere 2 bis 40 cm³/10min)
- einem Schmelzpunkt unter 240° C;
- einem Glaspunkt (Tg) größer 55° C
- einem Wassergehalt von kleiner 1000 ppm
- einem Monomeren-Restgehalt (Lactid) von kleiner 0.3%.
- einem Molekulargewicht von größer 80 000 Dalton.

Bevorzugte Polymilchsäuren sind beispielsweise Ingeo® 8052D, 6201D, 6202D, 6251D, 3051D und insbesondere Ingeo® 4020D, 4032D oder 4043D (Polylmilchsäure der Fa. NatureWorks).

Unter aliphatischen Polyestern aus aliphatischen Diolen und aliphatischen Dicarbonsäuren werden die folgenden Polyester: Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyester mit einer Polyesteramid- oder Polyesterurethan-Teilstruktur verstanden. Die aliphatischen Polyester werden beispielsweise von der Firma Mitsubishi unter dem Namen GS Pla® vermarktet. Neuere Entwicklungen sind in der WO-A 2010/034711 beschrieben.

Unter Polyhydroxyalkanoaten werden in erster Linie Poly-4-hydroxybutyrate und Poly-3-hydroxybutyrate und Copolyester der vorgenannten Poly-Hydroxybutyrate mit 3-Hydroxyvalerat, 3-Hydroxyhexanoat und/oder 3-Hydroxyoctanoat verstanden. Poly-3-hydroxybutyrate werden beispielsweise von der Fa. PHB Industrial unter dem Markennamen Biocycle® und von der Fa. Tianan unter dem Namen Enmat® vertrieben. Poly-3-hydroxybutyrate-co-4-hydroxybutyrate sind insbesondere von der Fa. Metabolix bekannt. Sie werden unter dem Handelsnamen Mirel® vertrieben. Poly-3-hydroxybutyrate-co-3-hydroxyhexanoate sind von der Fa. P&G oder Kaneka bekannt. Poly-3-hydroxybutyrate-co-3-hydroxyhexanoate weisen in der Regel einen 3-Hydroxyhexanoatanteil von 1 bis 20 und vorzugsweise von 3 bis 15 mol% bezogen auf das Polyhydroxyalkanoat auf. Die Polyhydroxyalkanoate weisen in der Regel ein Molekulargewicht Mw von 100.000 bis 1.000.000 und vorzugsweise von 300.000 bis 600.000 auf.

Unter Stärke wird auch Amylose verstanden; thermoplastifiziert bedeutet mit Weichmachern wie beispielsweise Glycerin, Sorbit oder Wasser thermoplastifiziert (siehe EP-A 539 541, EP-A 575 349, EP-A 652 910) oder auch oberflächenmodifiziert (siehe EP-A 937120, EP-A 947559, EP-A 965615). Erfindungsgemäße Polymermischungen, die 10 bis 35 Gew.-%, bezogen auf das Gesamtgewicht der Polymermischung, an thermoplastischer oder nicht thermoplastischer Stärke enthalten, weisen sowohl eine gute Abbaubarkeit im Boden als auch gute mechanische Eigenschaften wie insbesondere eine hohe Weiterreißfestigkeit auf.

Weiterhin können die erfindungsgemäßen Polyester oder Polyestermischungen weitere dem Fachmann bekannte, Additive enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorbers; UV-Stabilisators; Antifog-Mittel oder Farbstoffe.

Die Additive werden in Konzentrationen von 0 bis 2 Gew.-%, insbesondere 0,1 bis 2 Gew.-% bezogen auf den erfindungsgemäßen Polyester oder die Polyestermischung eingesetzt. Weichmacher können in 0,1 bis 10 Gew.-% bezogen auf den erfindungsgemäßen Polyester oder die Polyestermischung enthalten sein.

Auch können den Polymermischungen, insbesondere den Polymilchsäurehaltigen Mischungen 0 bis 1 Gew.-%, bevorzugt 0,01 bis 0,8 Gew.-%, besonders bevorzugt 0,05 bis 0,5 Gew.-%, bezogen auf das Gesamtgewicht der Polymermischung, eines Epoxidgruppen-haltigen Copolymers auf Basis Styrol, Acrylsäureester und/oder Methacrylsäureester zugesetzt werden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{W} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Besonders geeignet ist Joncryl® ADR 4368, das insbesondere in PLA haltigen Polyestermischungen eingesetzt wird.

Die erfindungsgemäßen Polyester und Polyestermischungen können bevorzugt die folgenden Füllstoffe enthalten.

Calciumcarbonat kann beispielsweise in 10 bis 25 Gew.-%, bevorzugt 10 bis 20 Gew.-%, besonders bevorzugt 12 bis 28 Gew.-%, bezogen auf das Gesamtgewicht der Polymermischung, eingesetzt werden. Unter anderem hat sich das Calciumcarbonat der Fa. Omya als geeignet erwiesen. Das Calciumcarbonat weist in der Regel eine mittlere Teilchengröße von 0,5 bis 10 Mikrometern bevorzugt 1 - 5, besonders bevorzugt 1 - 2,5 Mikrometern auf.

Talk kann beispielsweise in 3 bis 15 Gew.-%, bevorzugt 5 bis 10 Gew.-%, besonders bevorzugt 5 bis 8 Gew.-%, bezogen auf das Gesamtgewicht der Polymermischung, eingesetzt werden. Unter anderem hat sich der Talk der Fa. Mondo Minerals als geeignet erwiesen. Der Talk weist in der Regel eine mittlere Teilchengröße von 0,5 - 10, bevorzugt 1 - 8, besonders bevorzugt 1 - 3 Mikrometern auf.

Neben den Füllstoffen Calciumcarbonat und Talk können noch weitere Mineralien enthalten sein wie: Graphit, Gips, Ruß, Eisenoxid, Calciumchlorid, Kaolin, Siliziumdioxid (Quarz), Natriumcarbonat, Titandioxid, Silikat, Wollastonit, Glimmer, Montmorellonite, Mineralfasern und Naturfasern.

Naturfasern sind in der Regel Cellulosefasern, Kenaffasern, Hanffasern, Holzmehl oder Kartoffelschalen. Sie werden vorzugsweise in 1 bis 20 Gew.-% bezogen auf die Polymermischung eingesetzt.

Die Minerialien inklusive der Füllstoffe Calciumcarbonat und Talk können auch als Nanofüllstoffe eingesetzt werden. Nanofüllstoffe sind insbesondere feinteilige Schichtsilikate, bevorzugt Tonmineralien, besonders bevorzugt Montmorillonit enthaltend Tonmineralien, deren Oberfläche mit einem oder mehreren quarternären Ammoniumsalzen und/oder Phosphoniumsalzen und/oder Sulfoniumsalzen modifiziert sind. Als Tonmineralien bevorzugt sind natürliche Montmorillonite und Bentonite.

Insgesamt können den Polyestermischungen beispielsweise Füllstoffe in 10 bis 35 Gew.-%, bezogen auf das Gesamtgewicht der Polymermischung, zugesetzt werden.

### Anwendungstechnische Messungen

Die Molekulargewichte Mn und Mw der Polyester wurde gemäß DIN 55672-1:2016-03 mittels GPC bestimmt:
Die Bestimmung der Viskositätszahlen erfolgte nach EN-ISO 1628-1:2012-10, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.
Der E-Modul und die Streckspannung wurde mittels eines Zugversuchs an Zugstäben mit einer Dicke von etwa 420 µm gemäß ISO 527-3: 2003 bestimmt.
Die Schmelztemperatur Tm und die Glastemperatur Tg wurden nach DIN EN ISO 11357-3:2913-04 gemessen.

### Beispiele

Allgemeine Arbeitsvorschrift zur Herstellung der erfindungsgemäßen, aromatischen Polyester

Zur Herstellung des Polyesters 1 bis 9 sowie des Polyesters 1a wurden 92 mol-% 2,5-Dimethyfurandicarbonsäure (2,5-Dimethylfuranat- DM-FDCA), und 8 mol-% Dimethylnatriumsulfoisophthalsäure (DMNaSIP), 130 mol-% Diol und die unten beschriebenen Mengen Glycerin zusammen mit den unten beschriebenen Mengen Tetrabutylorthotitanat (TBOT) gemischt. Das Reaktionsgemisch wurde auf eine Temperatur von 180° C erhitzt und bei dieser Temperatur 2h lang umgesetzt. Anschließend wurde die Temperatur auf 240° C erhöht und überschüssiges Diol unter Vakuum über einen Zeitraum von 2h abdestilliert. Anschließend wurden bei 240° C die unten aufgeführten Mengen Hexamethylendiisocyanat (HDI) innerhalb 10min langsam zudosiert.

### Beispiel 1

92,2g (92 mol-%) 2,5-Dimethylfuranat; 12,8g (8 mol-%) DMNaSIP; 43,9g (130 mol-%) Ethylenglykol; 0,1g Glycerin; 0,07g TBOT; 0,83g HDI
Glastemperatur (Tg): 87° C, Viskositätszahl (VZ): 87, E-Modul: 2900 MPa, Streckspannung: 78 MPa

### Beispiel 1a

92,2g (92 mol-%) 2,5-Dimethylfuranat; 12,8g (8 mol-%) DMNaSIP; 43,9g (130 mol-%) Ethylenglykol; 0,1g Glycerin; 0,07g TBOT;
Tg: 87° C, VZ: 55, E-Modul: 2860 MPa, Streckspannung: 46 MPa

### Beispiel 2

92 mol-% 2,5-Dimethylfuranat; 8 mol-% DMNaSIP; 130 mol-% Diethylenglykol; 0,11g Glycerin; 0,08g TBOT; 0,85g HDI
Tg: 45° C, VZ: 105

### Beispiel 3

92 mol-% 2,5-Dimethylfuranat; 8 mol-% DMNaSIP; 130 mol-% 1,4-Butandiol; 0,1g Glycerin; 0,07g TBOT; 0,84g HDI
Tg: 38° C, VZ: 93

### Beispiel 4

92 mol-% 2,5-Dimethylfuranat; 8 mol-% DMNaSIP; 130 mol-% 1,6-Hexandiol; 0,11g Glycerin, 0,08g TBOT; 0,85g HDI
Tg: 10° C, VZ: 83

### Beispiel 5

92 mol-% 2,5-Dimethylfuranat; 8 mol-% DMNaSIP; 130 mol-% 1,8-Oktandiol; 0,11g Glycerin; 0,08g TBOT; 0,85 HDI
Tg: 8° C, VZ: 98

### Beispiel 6

92 mol-% 2,5-Dimethylfuranat; 8 mol-% DMNaSIP; 130 mol-% Neopentylglykol; 0,11g Glycerin; 0,08g TBOT; 0,85g HDI
Tg: 43° C, VZ: 92

### Beispiel 7

92 mol-% 2,5-Dimethylfuranat; 8 mol-% DMNaSIP; 130 mol-% 1,4-Cyclohexandimethanol; 0,08g Glycerin; 0,06g TBOT; 0,87g HDI
Tg: 95° C, VZ: 72

### Beispiel 8

92 mol-% 2,5-Dimethylfuranat; 8 mol-% DMNaSIP; 130 mol-% Triethylenglykol; 0,11g Glycerin; 0,08g TBOT; 0,86g HDI
Tg: 11° C, VZ: 76

### Beispiel 9

92 mol-% 2,5-Dimethylfuranat; 8 mol-% DMNaSIP; 130 mol-% Tetraethylenglykol; 0,11g Glycerin; 0,08g TBOT; 0,86 HDI
Tg: 4° C, VZ: 81

Allgemeines Verfahren zur Herstellung der aliphatisch-aromatischen Polyester:
Zur Herstellung der Polyester 10 bis 16 wurden 68/62 mol-% 2,5-Dimethyfurandicarbonsäure (2,5-Dimethylfuranat), und 2/8 mol-% Dimethylnatriumsulfoisophthalsäure (DMNaSIP), 130 mol-% 1,4-Butandiol und 0,1 Gew.-% Glycerin -bezogen auf den Polyester - zusammen mit 0,07g Tetrabutylorthotitanat (TBOT) (100 ppm Ti) gemischt. Das Reaktionsgemisch wurde auf eine Temperatur von 180° C erhitzt und bei dieser Temperatur 1h lang umgesetzt. Dann wurde 30mol% aliphatische Dicarbonsäure zugegeben und weitere 1h umgesetzt. Anschließend wurde die Temperatur auf 240° C erhöht und die überschüssige Dihydroxyverbindung unter Vakuum über einen Zeitraum von 2h abdestilliert. Anschließend wurden bei 240° C 0,8 Gew.-% Hexamethylendiisocyanat (HDI)-bezogen auf den Polyester - innerhalb 10min langsam zudosiert.

### Beispiel 10

62,6g (68 mol-%) 2,5-Dimethylfuranate; 3,0g (2 mol-%) DMNaSIP; 30,3g (30mol%) Sebacinsäure; 58,5g (130 mol-%) 1,4-Butandiol;
Schmelzpunkt (Tm): 128° C, Tg: -9° C, VZ 167

### Beispiel 11

57,0g (62 mol-%) 2,5-Dimethylfuranate; 11,8g (8 mol-%) DMNaSIP; 30,3g (30mol%) Sebacinsäure; 58,5g (130 mol-%) 1,4-Butandiol;
Tm: 120° C, Tg: -1° C, VZ: 154

### Beispiel 12

68 mol-% 2,5-Dimethylfuranate; 2 mol-% DMNaSIP; 30mol% Adipinsäure; 130 mol-% 1,4-Butandiol;
Tm: 129° C, Tg: -5° C, VZ 145

### Beispiel 13

68 mol-% 2,5-Dimethylfuranate; 2 mol-% DMNaSIP; 30mol% Dodecandisäure; 130 mol-% 1,4- Butandiol;
Tm: 129° C, Tg: -12° C, VZ 163

### Beispiel 14

68 mol-% 2,5-Dimethylfuranate; 2 mol-% DMNaSIP; 30mol% Brassylsäure; 130 mol-% 1,4-Butandiol;
Tm: 130° C, Tg: -13° C, VZ 151

### Beispiel 15

68 mol-% 2,5-Dimethylfuranate; 2 mol-% DMNaSIP; 30mol% 1,18-C₁₈-dicarbonsäure; 130 mol-% 1,4-Butandiol;
Tm: 133° C, Tg: 3° C, VZ 173

### Beispiel 16

68 mol-% 2,5-Dimethylfuranate; 2 mol-% DMNaSIP; 30mol% 1,36-C₃₆-dicarbonsäure; 130 mol-% 1,4-Butandiol;
Tm: 137° C, Tg: -33° C, VZ 189

### Folienkompostiertest

10g Polymer wurde in 50ml Hexafluoroisopropanol bei 20° C gelöst. Diese Polymerlösung wurde auf Petrischale gegossen und in Abzug Lösungsmittel verdampft. Folien (Dicke: ca. 30µm) wurden erhalten.

Die Folien wurden dann in ausgereifter Kompost aus einer gewerblichen Kompostanlage (gesiebt (Siebgröße: 1cm)) in Tupperwarebehälter in Kompost 1 - 2 cm tief eingegraben und wird mit Deckel verschlossen. Diese wurde im Warmeschrank bei 58° C inkubiert. Regelmäßig wird Trinkwasser auf dem Kompost gegossen, um den Kompost ausreichend feucht zu halten. Nach 2 & 4 Wochen wurden Folien Proben gewogen.

**Tabelle 1**

| Beispiele | V-A | A | B | V-C | C | V-D | D |
|---|---|---|---|---|---|---|---|
| DM-FDCA* | 100 | 98 | 92 | 70 | 68 | 70 | 68 |
| DM-NaSIP* | 0 | 2 | 8 | 0 | 2 | 0 | 2 |
| Adipinsäure* | | | | 30 | 30 | | |
| Sebazinsäure* | | | | | | 30 | 30 |
| Ethylenglykol* | 100 | 100 | 100 | | | | |
| 1,4-Butandiol* | | | | 100 | 100 | 100 | 100 |
| | | | | | | | |
| Gewicht (Anfang)** | 100 | 100 | 100 | 100 | 100 | 100 | 100 |
| Gewicht (nach 2 Wochen)** | 99 | 95 | 87 | 72 | 61 | 66 | 50 |
| Gewicht (nach 4 Wochen)** | 99 | 89 | 73 | 50 | 31 | 45 | 21 |
| | | | | | | | |
| * = Gew.-% | | | | | | | |
| ** = % | | | | | | | |

## Patentansprüche

1. Polyester bestehend aus:
A) einer Säurekomponente aus:
a1) 25 bis 100 mol-%, bezogen auf die Komponenten a1) und a2), 2,5-Furandicarbonsäure oder deren Ester oder Mischungen davon,
a2) 0 bis 75 mol-%, bezogen auf die Komponenten a1) und a2), einer aliphatischen C₄ -C₃₆-Dicarbonsäure oder deren Ester oder Mischungen davon und a3) 1 bis 10 mol-%, bezogen auf die Komponenten a1) bis a3), einer sulfonat-gruppenhaltigen Verbindung,
wobei die Molprozente der Komponenten a1) bis a3) zusammen 100 ergeben und
B) einer Diolkomponente aus:
b1) 98 bis 100 mol-%, bezogen auf die Komponenten a1) bis a3), zur Komponente A eines C₂-bis C₁₂-Alkandiol oder Mischungen davon und
b2) 0 bis 2 mol-%, bezogen auf die Komponenten a1) bis a3), eines mindestens 3 funktionelle Gruppen enthaltenden Verzweigers; und
C) gegebenenfalls darüber hinaus eine oder mehrere Komponenten ausgewählt aus:
c1) einer Etherfunktionen enthaltenden Dihydroxyverbindung der Formel I
HO-[(CH₂)ₙ-O]ₘ-H (I) in der n für 2, 3 oder 4 und m für eine ganze Zahl von 2 bis 250 stehen,
c2) einer Hydroxycarbonsäure der Formel IIa oder IIb 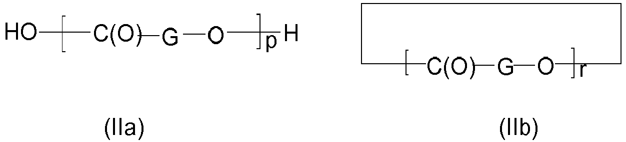 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, - C(R)H- und -C(R)HCH₂, wobei R für Methyl oder Ethyl steht
c3) einem Amino-C₂- bis C₁₂-alkanol oder mindestens einem Amino-C₅-bis C₁₀-cycloalkanol oder Mischungen davon
c4) einem Diamino-C₁- bis C₈-Alkan
c5) einem 2,2'-Bisoxazolins der allgemeinen Formel III 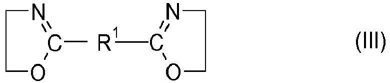 wobei R¹ eine Einfachbindung, eine (CH₂)_{z}-Alkylengruppe, mit z = 2, 3 oder 4, oder eine Phenylengruppe bedeutet
c6) einer Aminocarbonsäure ausgewählt aus der Gruppe, bestehend aus Caprolactam, 1,6 Aminocapronsäure, Laurinlactam, 1,12-Aminolaurinsäure und 1,11-Aminoundecansäure
oder Mischungen aus c1) bis c6)
wobei die Komponenten b1) und b2) und gegebenenfalls c1), c3) und c4) 100 mol-% bzw. die Komponenten a1) bis a3) und gegebenenfalls c5 100 mol% ergeben, und
D) 0,1 bis 4 Gew.-%, bezogen auf die Komponenten A und B und gegebenenfalls C einer Komponente
d1) mindestens eines di- oder oligofunktionellen Moleküls ausgewählt aus der Gruppe bestehend aus Isocyanat und Isocyanurat.

2. Polyester nach Anspruch 1, wobei Komponente d1) 1,6-Hexamethylendiisocyanat ist.

3. Polyester nach einem der Ansprüche 1 bis 2, enthaltend 0,01 bis 1 mol-%, bezogen auf die Komponenten a1) bis a3), Glycerin (b2).

4. Polyester nach einem der Ansprüche 1 bis 3, enthaltend 5 bis 10 mol-%, bezogen auf die Komponenten a1) bis a3), einer Isophthalsäure-5-sulfonsäure Natriumsalz (a3).

5. Polyester nach einem der Ansprüche 1 bis 3, enthaltend 1 bis 4,5 mol-%, bezogen auf die Komponenten a1) bis a3), einer Isophthalsäure-5-sulfonsäure Natriumsalz (a3).

6. Polyester nach einem der Ansprüche 1 bis 5, wobei 100 mol-%, bezogen auf die Komponenten a1) und a2), einer 2,5-Furandicarbonsäure oder deren Ester oder Mischungen davon, eingesetzt werden.

7. Polyester nach Anspruch 6, wobei Komponente b1) Ethylenglykol ist.

8. Polyester nach einem der Ansprüche 1 bis 4, enthaltend 50 bis 75 mol-%, bezogen auf die Komponenten a1) und a2), einer 2,5-Furandicarbonsäure oder deren Ester oder Mischungen davon, und 25 bis 50 mol-%, bezogen auf die Komponenten a1) und a2), einer aliphatischen C₄ -C₃₆-Dicarbonsäure oder deren Ester oder Mischungen davon.

9. Polyester nach Anspruch 8, wobei Komponente b1) 1,4-Butandiol ist.

10. Wäßrige Dispersion enthaltend einen Polyester gemäß Anspruch 4 oder den Ansprüchen 7 bis 10, sofern rückbezogen auf Anspruch 4.

11. Verwendung der Polyester gemäß einem der Ansprüche 1 bis 9 zur Herstellung von Fasern, Folien oder Formteilen.

12. Verwendung der wäßrige Dispersion gemäß Anspruch 10 für die Papierbeschichtung oder die Impregnierung eines Vlieses oder non-woven Artikels.

13. Verfahren zur Herstellung der Polyester gemäß einem der Ansprüche 1 bis 9, wobei als Komponente a1) 2,5 Furandicarbonsäure-dimethylester und als Komponente a3) Isophthalsäuredimethylester-5-sulfonsäure Natriumsalz eingesetzt werden.

14. Polyestermischung enthaltend:
i) 5 bis 95 Gew.-% bezogen auf die Polyestermischung eines Polyesters gemäß einem der Ansprüche 1 bis 9,
ii) 95 bis 5 Gew.-% bezogen auf die Polyestermischung mindestens einer oder mehrerer Komponenten ausgewählt aus der Gruppe bestehend aus: einem Polyester hergestellt aus einer aliphatischen Dicarbonsäure und einem aliphatischen Diol; Polycaprolacton, Stärke, Zellulose, Polyhydroxyalkanoat, Polyglykolsäure und Polymilchsäure.

## Claims

1. A polyester consisting of:
A) an acid component composed of:
a1) 25 to 100 mol% based on the components a1) and a2) of 2,5-furandicarboxylic acid or its esters or mixtures thereof a2) 0 to 75 mol% based on the components a1) and a2) of an aliphatic C₄-C₃₆-dicarboxylic acid or its esters or mixtures thereof and
a3) 1 to 10 mol% based on the components a1) to a3) of a sulfonate-containing compound,
wherein the mol percentages of the components a1) to a3) sum to 100, and
B) a diol component composed of:
b1) 98 to 100 mol% based on the components a1) to a3) of component A of a C₂- to C₁₂-alkanediol or mixtures thereof and
b2) 0 to 2 mol% based on the components a1) to a3) of a branching agent comprising at least 3 functional groups; and
C) optionally also one or more components selected from:
c1) an ether-containing dihydroxyl compound of formula I
HO-[(CH₂)ₙ-O]ₘ-H (I)
in which n represents 2, 3 or 4 and m represents an integer from 2 to 250,
c2) a hydroxycarboxylic acid of formula Ila or IIb 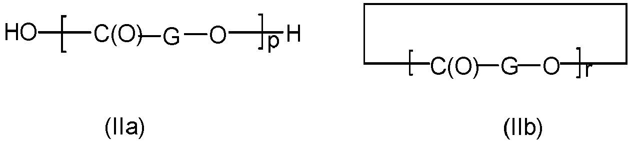 in which p represents an integer from 1 to 1500 and r represents an integer from 1 to 4 and G represents a radical selected from the group consisting of phenylene, -(CH₂)_{q}-, wherein q represents an integer from 1 to 5, - C(R)H- and -C(R)HCH₂, wherein R represents methyl or ethyl
c3) an amino-C₂- to C₁₂-alkanol or at least one amino-C₅- to C₁₀-cycloalkanol or mixtures thereof
c4) a diamino-C₁- to C₈-alkane
c5) a 2,2'-bisoxazoline of general formula III 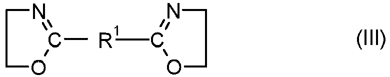 wherein R¹ represents a single bond, a (CH₂)_{z}-alkylene group, where z = 2, 3 or 4, or a phenylene group
c6) an aminocarboxylic acid selected from the group consisting of caprolactam, 1,6-aminocaproic acid, laurolactam, 1,12-aminolauric acid and 1,11-aminoundecanoic acid
or mixtures of c1) to c6)
wherein the components b1) and b2) and optionally c1), c3) and c4) sum to 100 mol% and the components a1) to a3) and optionally c5) sum to 100 mol% and
D) 0.1 % to 4% by weight based on the components A and B and optionally C of a component
d1) at least one di- or oligo-functional molecule selected from the group consisting of isocyanate and isocyanurate.

2. The polyester according to claim 1, wherein component d1) is 1,6-hexamethylene diisocyanate.

3. The polyester according to either of claims 1 and 2, comprising 0.01 to 1 mol% based on the components a1) to a3) of glycerol (b2).

4. The polyester according to any of claims 1 to 3, comprising 5 to 10 mol% based on the components a1) to a3) of an isophthalic acid-5-sulfonic acid sodium salt (a3).

5. The polyester according to any of claims 1 to 3, comprising 1 to 4.5 mol% based on the components a1) to a3) of an isophthalic acid-5-sulfonic acid sodium salt (a3).

6. The polyester according to any of claims 1 to 5, wherein 100 mol% based on the components a1) and a2) of a 2,5-furandicarboxylic acid or its esters or mixtures thereof are employed.

7. The polyester according to claim 6, wherein component b1) is ethylene glycol.

8. The polyester according to any of claims 1 to 4, comprising 50 to 75 mol% based on the components a1) and a2) of a 2,5-furandicarboxylic acid or its esters or mixtures thereof and 25 to 50 mol% based on the components a1) and a2) of an aliphatic C₄ -C₃₆-dicarboxylic acid or its esters or mixtures thereof.

9. The polyester according to claim 8, wherein component b1) is 1,4-butanediol.

10. An aqueous dispersion comprising a polyester according to claim 4 or claims 7 to 10 to the extent that they refer back to claim 4.

11. The use of the polyesters according to any of claims 1 to 9 for producing fibers, films and moldings.

12. The use of the aqueous dispersion according to claim 10 for paper coating or for impregnation of a nonwoven fabric or article.

13. A process for producing the polyesters according to any of claims 1 to 9, wherein dimethyl 2,5-furandicarboxylate is employed as component a1) and isophthalic acid dimethyl ester-5-sulfonic acid sodium salt is employed as component a3).

14. A polyester mixture comprising:
i) 5% to 95% by weight based on the polyester mixture of a polyester according to any of claims 1 to 9,
ii) 95% to 5% by weight based on the polyester mixture of at least one or more components selected from the group consisting of: a polyester produced from an aliphatic dicarboxylic acid and an aliphatic diol; polycaprolactone, starch, cellulose, polyhydroxyalkanoate, polyglycolic acid and polylactic acid.

## Revendications

1. Polyester constitué :
A) d'un composant d'acide composé de :
a1) 25 à 100 % en moles, par rapport aux composants a1) et a2), d'acide 2,5-furannedicarboxylique ou de ces esters ou de mélanges correspondants,
a2) 0 à 75 % en moles, par rapport aux composants a1) et a2), d'un acide dicarboxylique aliphatiques en C₄₋₃₆ ou de ces esters ou de mélanges correspondants et
a3) 1 à 10 % en moles, par rapport aux composants a1) à a3), d'un composé contenant des groupes sulfonate,
les pourcentages en moles des composants a1) à a3) donnant ensemble 100 et
B) d'un composant de diol composé de :
b1) 98 à 100 % en moles, par rapport aux composants a1) à a3), d'un alcanediol en C₂₋₁₂ ou de mélanges correspondants pour le composant A et
b2) 0 à 2 % en moles, par rapport aux composants a1) à a3), d'un agent de ramification contenant au moins 3 groupes fonctionnels ; et
C) éventuellement en outre un ou plusieurs composants choisis parmi :
c1) un composé de type dihydroxy contenant des fonctions éther, de formule I
HO-[(CH₂)ₙ-O]ₘ-H (I)
dans laquelle n représente 2, 3 ou 4 et m représente un nombre entier de 2 à 250,
c2) un acide hydroxycarboxylique de formule IIa ou IIb 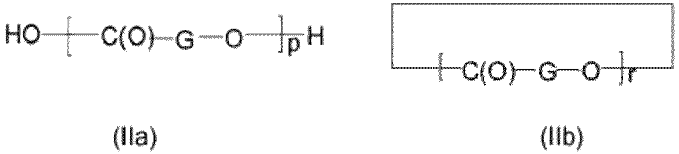 dans laquelle p signifie un nombre entier de 1 à 1 500 et r signifie un nombre entier de 1 à 4, et G représente un radical qui est choisi dans le groupe constitué par phénylène, -(CH₂)_{q}-, q signifiant un nombre entier de 1 à 5, - C(R)H- et -C(R)HCH₂, R représentant méthyle ou éthyle
c3) un aminoalcanol en C₂₋₁₂ ou au moins un aminocycloalcanol en C₅₋₁₀ ou des mélanges correspondants
c4) un diaminoalcane en C₁₋₈
c5) une 2,2'-bisoxazoline de formule générale III 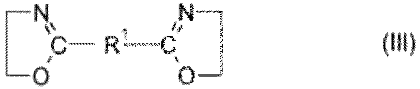 R¹ signifiant une simple liaison, un groupe (CH₂)_{z}-alkylène, avec z = 2, 3 ou 4, ou un groupe phénylène
c6) un acide aminocarboxylique choisi dans le groupe constitué par le caprolactame, l'acide 1,6-aminocaproïque, le laurolactame, l'acide 1,6-aminolaurique et l'acide 1,11-aminoundécanoïque
et des mélanges de c1) à c6)
les composants b1) et b2) et éventuellement c1), c3) et c4) donnant 100 % en moles respectivement les composants a1) à a3) et éventuellement c5 donnant 100 % en moles, et
D) 0,1 à 4 % en poids, par rapport aux composants A et B et éventuellement C, d'un composant
d1)d'au moins une molécule difonctionnelle ou oligofonctionnelle choisie dans le groupe constitué par un isocyanate et un isocyanurate.

2. Polyester selon la revendication 1, le composant d1) étant le 1,6-diisocyanate d'hexamethylène.

3. Polyester selon l'une quelconque des revendications 1 et 2, contenant 0,01 à 1 % en moles, par rapport aux composants a1) à a3), de glycérine (b2).

4. Polyester selon l'une quelconque des revendications 1 à 3, contenant 5 à 10 % moles, par rapport aux composants a1) à a3), d'un 5-sulfonate de sodium d'acide isophtalique (a3).

5. Polyester selon l'une quelconque des revendications 1 à 3, contenant 1 à 4,5 % moles, par rapport aux composants a1) à a3), d'un 5-sulfonate de sodium d'acide isophtalique (a3).

6. Polyester selon l'une quelconque des revendications 1 à 5, 100 % en moles, par rapport aux composants a1) et a2), d'un acide 2,5-furannedicarboxylique ou de ces esters ou de mélanges correspondants, étant utilisés.

7. Polyester selon la revendication 6, le composant b1) étant l'éthylène glycol.

8. Polyester selon l'une quelconque des revendications 1 à 4, contenant 50 à 75 % en moles, par rapport aux composants a1) et a2), d'un acide 2,5-furannedicarboxylique ou de ces esters ou de mélanges correspondants, et 25 à 50 % en moles, par rapport aux composants a1) et a2), d'un acide dicarboxylique aliphatique en C₄₋₃₆ ou de ces esters ou de mélanges correspondants.

9. Polyester selon la revendication 8, le composant b1) étant le 1,4-butanediol.

10. Dispersion aqueuse contenant un polyester selon la revendication 4 ou les revendications 7 à 10, tant que dépendantes à la revendication 4.

11. Utilisation des polyesters selon l'une quelconque des revendications 1 à 9 pour la préparation de fibres, de feuilles ou de pièces moulées.

12. Utilisation de la dispersion aqueuse selon la revendication 10 pour le revêtement de papier ou l'imprégnation d'un non-tissé ou d'un article non-tissé.

13. Procédé pour la préparation des polyesters selon l'une quelconque des revendications 1 à 9, un ester diméthylique d'acide 2,5-furannedicarboxylique étant utilisé en tant que composant a1) et un 5-sulfonate de sodium d'ester diméthylique d'acide isophtalique étant utilisé en tant que composant a3).

14. Mélange de polyesters contenant :
i) 5 à 95 % en poids par rapport au mélange de polyesters d'un polyester selon l'une quelconque des revendications 1 à 9,
ii) 95 à 5 % en poids par rapport au mélange de polyesters d'au moins un ou plusieurs composants choisis dans le groupe constitué par : un polyester préparé à partir d'un acide dicarboxylique aliphatique et d'un diol aliphatique ; une polycaprolactone, des amidons, des celluloses, un polyhydroxyalcanoate, un poly(acide glycolique) et un poly(acide lactique).
